# EUROPÄISCHE PATENTSCHRIFT

(11) **EP 3 508 743 B1**
(45) Veröffentlichungstag und Bekanntmachung des Hinweises auf die Patenterteilung: **03.02.2021**
(21) Anmeldenummer: 18212339.8
(22) Anmeldetag: 13.12.2018
(51) Int. Cl.: F16C 35/02, F16C 35/06, F16B 5/02, F16B 23/00

(54) **LAGERANORDNUNG**
BEARING ASSEMBLY
DISPOSITIF DE PALIER

(30) Priorität: 03.01.2018 DE 102018200055
(43) Veröffentlichungstag der Anmeldung: 10.07.2019
(73) Patentinhaber: Aktiebolaget SKF, 41 550 Göteborg (SE)
(72) Erfinder: Haar, Tilmann, 97437 Haßfurt (DE); Reck, Daniel, 97074 Würzburg (DE); Schulz, Ingo, 97447 Gerolzhofen (DE)
(74) Vertreter: Kohl, Thomas

(56) Entgegenhaltungen:
- EP-A2- 0 233 596
- CN-U- 203 542 509
- JP-A- 2013 166 518

## Beschreibung

Vorliegende Erfindung betrifft eine Lageranordnung zum drehbaren Lagern eines ersten Trägerelements an einem zweiten Trägerelement gemäß dem Oberbegriff von Patentanspruch 1.

Um zwei Trägerelemente, beispielsweise einen Arm eines Roboters mit einem Basisteil, zu verbinden, so dass das eine Trägerelement in Bezug auf das andere Trägerelement verschwenkt oder rotiert werden kann, können Lagerelemente verwendet werden. Diese Lagerelemente können einfache Lager sein, aber auch komplexere Strukturen, wie beispielsweise Planetengetriebe.

Diese Lagerelemente können zwischen den Trägerelementen, die zueinander drehbar gelagert werden sollen, angeordnet werden. Die Lagerelemente sind dabei um eine gemeinsame Drehachse rotierbar und können auf einer gemeinsamen Welle angeordnet sein. Um die einzelnen Elemente, d.h. die beiden Trägerelemente sowie die Lagerelemente, aneinander zu befestigen, werden in bekannten Systemen alle Elemente angeordnet und dann das erste Teil, d.h. das erste Lagerelement, an dem ersten Trägerelement, beispielsweise dem Arm, befestigt, wobei ein Befestigungsbolzen oder eine Befestigungsschraube von der Außenseite des ersten Trägerelements durch das erste Trägerelement in das erste Teil eingeführt wird. Anschließend wird das zweite Trägerelement, beispielsweise ein Basisteil, an dem zweiten Teil, d.h. dem zweiten Lager befestigt, wobei ein Befestigungsbolzen oder eine Befestigungsschraube von der Außenseite des zweiten Trägerelements durch das zweite Trägerelement in das zweite Teil eingeführt wird. Nachteilig hierbei ist, dass es zwei unterschiedliche Befestigungsrichtungen gibt (einmal von der Außenseite des ersten Trägerelements und einmal von der Außenseite des zweiten Trägerelements), wodurch ein vollständig automatisierter Befestigungsprozess schwierig zu realisieren ist. JP2013-166518 zeigt eine Lageranordnung gemäß dem Oberbegriff des Anspruchs 1.

Alternativ können nach der Anordnung der einzelnen Elemente beide Befestigungsbolzen oder -schrauben von der gleichen Seite, beispielsweise von der Seite des ersten Trägerelements, eingeführt werden, indem die beiden Lagerelemente, d.h. das erste Teil und das zweite Teil, unterschiedliche Durchmesser aufweisen. Auf diese Weise können an beiden Teilen die Öffnungen zur Aufnahme der Bolzen im zusammengesetzten Zustand von einer Seite erreicht werden. Allerdings führt dies dazu, dass entweder das kleinere Teil eine geringere Lastkapazität hat, d.h. aufgrund der geringeren Größe nur geringere Lasten aufnehmen kann, und/oder dass das größere Teil ein höheres Gewicht aufweist, und daher teurer ist bzw. zu einer ungleichen Lastverteilung auf der Welle führt.

Es ist deshalb Aufgabe vorliegender Erfindung, eine Lageranordnung bereitzustellen, bei der ein erstes und ein zweites Trägerelement mittels der Lageranordnung auf einfache Weise drehbar gelagert werden können, wobei ein automatisierter Befestigungsvorgang der Lageranordnung an dem ersten und dem zweiten Trägerelement möglich ist.

Diese Aufgabe wird durch die Lageranordnung gemäß Patentanspruch 1 gelöst.

Die Lageranordnung dient dabei zum drehbaren Lagern eines ersten Trägerelements an einem zweiten Trägerelement und weist ein erstes Teil und ein zweites Teil auf, die um eine gemeinsame Drehachse rotierbar sind, wobei das erste Teil mit zumindest einem ersten Befestigungsmittel an dem ersten Trägerelement befestigbar ist, und wobei das zweite Teil mit zumindest einem zweiten Befestigungsmittel an dem zweiten Trägerelement befestigbar ist,

Um die Befestigung zu vereinfachen und eine automatisierte Befestigung zu ermöglichen, weist das erste Teil zumindest eine erste Durchgangsbohrung und das zweite Teil zumindest eine zweite Durchgangsbohrung auf. Die erste und die zweite Durchgangsbohrung sind derart aufeinander ausrichtbar, dass die erste und die zweite Durchgangsbohrung miteinander fluchten. Das zweite Befestigungsmittel kann dann durch die erste Durchgangsbohrung in die zweite Durchgangsbohrung geschoben werden, um das zweite Teil an dem zweiten Trägerelement zu befestigen. Anschließend kann das erste Befestigungsmittel in die erste Durchgangsbohrung geschoben werden, um das erste Teil an dem ersten Trägerelement zu befestigen.

Bei dem ersten Trägerelement kann es sich um einen schwenkbaren Arm, beispielsweise eines Roboters, handeln. Bei dem zweiten Trägerelement kann es sich beispielsweise um den Körper des Roboters handeln. Das zweite Trägerelement kann als Basiselement bezeichnet werden, welches ein relatives Bezugssystem in Bezug auf das erste Trägerelement darstellt.

Das erste Teil und das zweite Teil können zusammen ein Getriebe darstellen. Beispielsweise können das erste Teil und das zweite Teil Teile eines Planetengetriebes darstellen, wobei die beiden Teile Hohlräder sein können. Bei der gemeinsamen Drehachse kann es sich in diesem Fall um eine zentrale Welle handeln, auf der die beiden Teile fliegend gelagert sind. Alternativ können die beiden Teile auch zwei Lager sein, die über eine zentrale Welle miteinander verbunden sind.

Durch das Durchführen des zweiten Befestigungsmittels durch die erste Durchgangsbohrung in die zweite Durchgangsbohrung kann die Befestigung von einer Seite, das heißt von der Seite des ersten Trägerelements, erfolgen. Eine Befestigung von der anderen Seite, das heißt von der Seite des zweiten Trägerelements, ist daher nicht erforderlich. Somit kann der Befestigungsprozess vollautomatisiert ablaufen, da der Zugriff auf einfache Weise nur von einer Seite erfolgt. Des Weiteren sind keine unterschiedlichen Durchmesser der beiden Teile nötig.

Die erste Durchgangsbohrung und die zweite Durchgangsbohrung können sich koaxial oder radial zu der gemeinsamen Drehachse erstrecken.

Dies hängt von der Ausgestaltung der Lager ab. Handelt es sich um Radiallager, erstrecken sich die Durchgangsbohrungen radial zu der gemeinsamen Drehachse. Sind die beiden Teile Axiallager, erstrecken sich die Durchgangsbohrungen koaxial zu der gemeinsamen Drehachse.

Gemäß einer Ausführungsform weist das zweite Befestigungsmittel ein Innenprofil zur Aufnahme eines Werkzeugs zum Befestigen des zweiten Befestigungsmittels an dem zweiten Trägerelement auf.

Das Innenprofil kann dabei beispielsweise ein Sechskant-Innenprofil sein. Da das zweite Befestigungsmittel ein Innenprofil aufweist, um ein Werkzeug aufzunehmen, kann die Durchgangsbohrung so bemessen sein, dass lediglich das Befestigungsmittel eingeführt werden kann. Zusätzlicher Platz für das Werkzeug muss nicht vorhanden sein, da dieses von innen in das Befestigungsmittel eingreift.

Das erste Befestigungsmittel kann ein Außenprofil zur Aufnahme eines Werkzeugs zum Befestigen der ersten Befestigungsmittel an dem ersten Teil aufweisen.

Das Außenprofil kann dabei ebenfalls ein Sechskantprofil sein. Das erste Befestigungsmittel kann dabei nach der Befestigung aus dem ersten Trägerelement hervorstehen. Alternativ kann das erste Trägerelement eine Vertiefung aufweisen, die der Tiefe des Außenprofils entspricht, so dass dieses in der Vertiefung versenkt werden kann. Der Durchmesser der Vertiefung sollte ausreichend groß sein, um ein Umgreifen des Außenprofils durch das Werkzeug zu ermöglichen. Es ist auch möglich, dass das erste Befestigungsmittel statt eines Außenprofils ein Innenprofil aufweist. Das Innenprofil kann beispielsweise auch ein Schlitz zur Aufnahme eines Schraubendrehers sein.

Um das erste Trägerelement mit dem ersten Teil zu verbinden, kann die erste Durchgangsbohrung ein Gewinde aufweisen und das erste Trägerelement einen Abstützabschnitt aufweisen.

Das erste Befestigungsmittel greift dann in das Gewinde der ersten Durchgangsbohrung ein und stützt sich an dem Abstützabschnitt des ersten Trägerelements ab. Auf diese Weise kann das erste Trägerelement mit dem ersten Teil mittels Zugkraft verbunden werden. Der Abstützabschnitt kann dabei entweder direkt ein Teil des ersten Trägerelements sein oder durch eine Beilagscheibe oder Ähnliches gebildet werden.

Das zweite Trägerelement kann ein Gewinde aufweisen und das zweite Teil kann einen Abstützabschnitt aufweisen. Dabei ist das zweite Befestigungsmittel dazu eingerichtet, in das Gewinde des zweiten Trägerelements einzugreifen und sich an dem Abstützabschnitt des zweiten Teils abzustützen.

Der Abstützabschnitt des zweiten Teils ist dabei in dem zweiten Teil integriert, sodass sich das zweite Befestigungsmittel an dem zweiten Teil abstützen kann. Das Befestigungsmittel verschwindet dabei vollständig in dem zweiten Teil.

Zwischen dem ersten Teil und dem ersten Trägerelement und/oder dem zweiten Teil und dem zweiten Trägerelement kann jeweils zumindest ein drittes Teil angeordnet werden. Das dritte Teil weist dabei zumindest eine Aussparung auf, die auf die erste und die zweite Durchgangsbohrung ausrichtbar ist.

Das dritte Teil kann beispielsweise verwendet werden, um einen Abstand zwischen dem ersten Teil und dem ersten Trägerelement und/oder einen Abstand zwischen dem zweiten Teil und dem zweiten Trägerelement vorzusehen. Das dritte Teil kann beispielsweise als Scheibe mit Löchern ausgestaltet sein, die die Aussparung darstellen, oder kann als in radialer Richtung gewellte Scheibe ausgestaltet sein. Die Täler der gewellten Scheibe stellen dabei die Aussparungen dar.

Die Lageranordnung kann beispielsweise ein Planetengetriebe sein, welches in einem Getriebegehäuse angeordnet ist. In diesem Fall können das erste Teil und das zweite Teil zwei Teile des Planetengetriebes darstellen. Dabei steuert das zweite Teil, das mit dem zweiten Trägerelement, beispielsweise dem Basiselement, verbunden ist, das erste Trägerelement, das mit dem ersten Teil verbunden ist, an. Das erste Teil und das zweite Teil können eine Übersetzungsstufe bilden, so dass eine unterschiedliche Drehgeschwindigkeit zwischen dem ersten Trägerelement und dem zweiten Trägerelement möglich ist.

Das erste Teil und das zweite Teil können beide als Radiallager oder beide als Axiallager ausgestaltet sein. In Abhängigkeit davon können die Durchgangsbohrungen koaxial oder radial zur Drehachse angeordnet werden, wie oben erläutert.

Die Lageranordnung kann beispielsweise in einem Roboter eingesetzt werden. Dieser weist ein erstes Trägerelement und ein zweites Trägerelement auf, die durch die Lageranordnung drehbar bzw. schwenkbar zueinander gelagert werden. Bei dem ersten Trägerelement kann es sich um Teile des Roboters handeln, die drehbar bzw. schwenkbar zu dem zweiten Trägerelement angeordnet werden sollen. Das zweite Trägerelement stellt dabei ein festes Bezugssystem für das erste Trägerelement dar und kann selbst wiederum drehbar zu einem weiteren Trägerelement gelagert sein. Das erste Trägerelement ist beispielsweise ein Arm oder ein Teil eines Arms eines Roboters, wobei das zweite Trägerelement im ersten Fall ein Roboterkörper und im zweiten Fall ein weiterer Teil eines Roboterarms sein kann. Die Lageranordnung kann als Gelenk zwischen dem ersten Trägerelement und dem zweiten Trägerelement fungieren.

Gemäß einem weiteren Aspekt wird ein Verfahren zum drehbaren Lagern eines ersten Trägerelements an einem zweiten Trägerelement vorgeschlagen. Hierbei werden in einem ersten Schritt das erste Trägerelement, das zweite Trägerelement sowie eine Lageranordnung zwischen diesen beiden Trägerelementen angeordnet. Die Lageranordnung weist ein erstes Teil und ein zweites Teil auf, die um eine gemeinsame Drehachse rotierbar sind, wobei das erste Teil mit zumindest einem ersten Befestigungsmittel an dem ersten Trägerelement befestigbar ist, und wobei das zweite Teil mit zumindest einem zweiten Befestigungsmittel an dem zweiten Trägerelement befestigbar ist.

Das erste Teil weist zumindest eine erste Durchgangsbohrung auf und das zweite Teil weist zumindest eine zweite Durchgangsbohrung auf. In einem zweiten Schritt werden die erste und die zweite Durchgangsbohrung derart aufeinander ausgerichtet, dass die erste und die zweite Durchgangsbohrung miteinander fluchten und das zweite Befestigungsmittel durch die erste Durchgangsbohrung in die zweite Durchgangsbohrung schiebbar ist. Wurde das zweite Befestigungsmittel in einem dritten Schritt entsprechend durchgeschoben, befestigt es das zweite Teil an dem zweiten Trägerelement.

In einem vierten Schritt wird das erste Befestigungsmittel in die erste Durchgangsbohrung geschoben und befestigt das erste Teil an dem ersten Trägerelement.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigt:

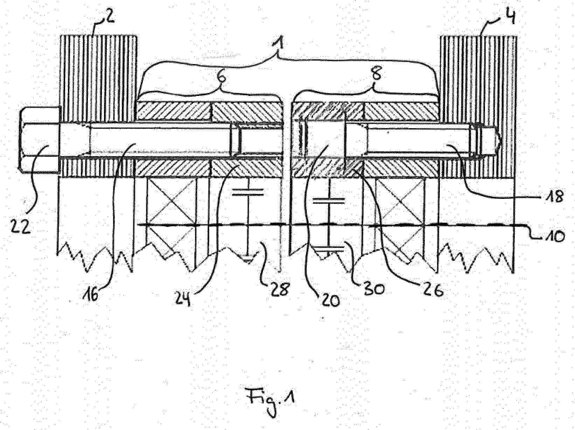

Fig. 1: eine Schnittansicht einer Lageranordnung zum drehbaren Lagern eines ersten und eines zweiten Trägerelements.

Im Folgenden werden gleiche oder funktionell gleichwirkende Elemente mit denselben Bezugszeichen gekennzeichnet.

Fig. 1 zeigt eine Lageranordnung 1, die dazu eingerichtet ist, zwei Trägerelemente 2, 4, beispielsweise einen Arm 2 eines Roboters an einem Basisteil 4, drehbar zu lagern. Die Lageranordnung 1 besteht aus einem ersten Teil 6 und einem zweiten Teil 8, die um eine gemeinsame Drehachse 10 (lediglich schematisch angedeutet) rotierbar sind. Das erste Teil 6 und das zweite Teil 8 können einfache Lager sein, aber auch komplexere Strukturen, wie beispielsweise Teile eines Planetengetriebes. Im Falle eines Planetengetriebes kann es sich bei der Lageranordnung 1 um ein Planetengetriebe handeln, welches in einem Getriebegehäuse angeordnet ist. Das erste Teil 6 und das zweite Teil 8 sind dann auf einer gemeinsamen Welle angeordnet. Wie in Fig. 1 angedeutet ist, können das erste Teil 6 und das zweite Teil 8 Zahnräder 28, 30 aufweisen, die Teil eines Planetengetriebes sind. Des Weiteren können Hohlräder 24, 26 Elemente des ersten und zweiten Teils 6, 8 sein.

Um die einzelnen Elemente 2, 4, 6, 8 aneinander zu befestigen, werden zunächst alle Elemente angeordnet. Um eine einfache, automatisierte Befestigung zu ermöglichen, sieht die in Fig. 1 gezeigte Lageranordnung 1 eine Befestigung von einer Seite vor.

Im Folgenden wird diese Befestigung mit Bezugnahme auf Fig. 1 beschrieben.

Das erste Teil 6 weist zumindest eine erste Durchgangsbohrung und das zweite Teil 8 zumindest eine zweite Durchgangsbohrung auf. Die erste und die zweite Durchgangsbohrung sind derart aufeinander ausrichtbar, dass sie miteinander fluchten. Jedes Teil 6, 8 kann auch mehr als eine Durchgangsbohrung aufweisen.

Zuerst wird ein zweites Befestigungsmittel 18, beispielsweise ein Befestigungsbolzen oder eine Befestigungsschraube, durch die erste Durchgangsbohrung in die zweite Durchgangsbohrung geschoben, um das zweite Teil 8 an dem zweiten Trägerelement 4 zu befestigen. Um das zweite Teil 8 und das zweite Trägerelement 4 festzuziehen, weist das zweite Befestigungsmittel 18 ein Gewinde auf, das in ein Gegengewinde in dem zweiten Trägerelement 4 eingreift. Auf der gegenüberliegenden Seite des zweiten Befestigungsmittels 18 ist ein Innenprofil 20 vorgesehen, in das ein Werkzeug eingreifen kann, um das zweite Befestigungsmittel 18 zu drehen. Des Weiteren ist in dem zweiten Teil 8 ein Abstützabschnitt vorgesehen, an dem sich das dem Gewinde gegenüberliegende Ende des zweiten Befestigungsmittels 18 abstützen kann.

Anschließend kann ein erstes Befestigungsmittel 16, beispielsweise ein Befestigungsbolzen oder eine Befestigungsschraube, in die erste Durchgangsbohrung geschoben werden, um das erste Teil 6 an dem ersten Trägerelement 2 zu befestigen. Um das erste Teil 6 und das erste Trägerelement 2 festzuziehen, weist das erste Befestigungsmittel 16 ebenfalls ein Gewinde auf, das allerdings in ein Gegengewinde in dem ersten Teil 6 eingreift. Auf der gegenüberliegenden Seite des ersten Befestigungsmittels 16 ist ein Außenprofil 22 vorgesehen, das ein Werkzeug umgreifen kann, um das erste Befestigungsmittel 16 zu drehen. Das erste Trägerelement 2 stellt dabei einen Abstützabschnitt dar, an dem sich das dem Gewinde gegenüberliegende Ende des ersten Befestigungsmittels 16 abstützen kann. Alternativ kann der Abstützabschnitt auch durch eine Beilagscheibe oder ähnliches gebildet werden.

Nachdem das erste Trägerelement 2 und das erste Teil 4 sowie das zweite Teil 6 und das zweite Trägerelement 4 jeweils aneinander befestigt wurden, lagert die Lageranordnung 1 das erste Trägerelement 2 drehbar an dem zweiten Trägerelement 4. Die Befestigung erfolgt dabei nur von einer Seite 12 und auf derselben Höhe. Die Teile 6, 8 müssen daher nicht zwingend unterschiedliche Durchmesser aufweisen, können dies aber, wenn erforderlich.

In einer bisher bekannten Lageranordnung war es erforderlich, die Befestigung von beiden Außenseiten vorzunehmen. Hierzu wurde ein Befestigungsbolzen oder eine Befestigungsschraube 16 von der Seite des ersten Trägerelements 2 durch das erste Trägerelement 2 in das erste Teil 6 eingeführt wird. Anschließend wurde das zweite Trägerelement 4 an dem zweiten Teil 8 befestigt, wobei ein Befestigungsbolzen oder eine Befestigungsschraube 18 von der Seite des zweiten Trägerelements 4 durch das zweite Trägerelement 4 in das zweite Teil 8 eingeführt wird. Durch die zwei unterschiedlichen Befestigungsrichtungen war es jedoch schwierig, einen vollständig automatisierten Befestigungsprozess zu realisieren.

Eine alternative, bisher bekannte Befestigungsmöglichkeit erfolgte zwar von einer Seite, allerdings musste das zweite Teil 8 einen größeren Durchmesser als das erste Teil 6 aufweisen. Das erste Teil 6 und das erste Trägerelement 2 wurden von links mit einer Befestigungsschraube 16 aneinander befestigt. Das zweite Teil 8 und das zweite Trägerelement 4 wurden ebenfalls von links mit einer Befestigungsschraube 18 aneinander befestigt, allerdings auf einem anderen Durchmesser als das erste Teil 6 und das erste Trägerelement 2. Dies führte dazu, dass ein Teil kleiner sein musste und daher nur geringere Lasten tragen konnte.

Diese Nachteile werden durch die in Fig. 1 vorgeschlagene Lageranordnung 1 vermieden. Durch das Durchführen des zweiten Befestigungsmittels 18 durch die erste Durchgangsbohrung in die zweite Durchgangsbohrung kann die Befestigung nur von einer Seite, das heißt von der Seite des ersten Trägerelements 2, erfolgen. Somit kann der Befestigungsprozess vollautomatisiert ablaufen, da der Zugriff auf einfache Weise nur von einer Seite erfolgt.

### Bezugszeichenliste

- 1: Lageranordnung
- 2: erstes Trägerelement
- 4: zweites Trägerelement
- 6: erstes Teil
- 8: zweites Teil
- 10: Drehachse
- 12: Befestigungsrichtung
- 16: erstes Befestigungsmittel
- 18: zweites Befestigungsmittel
- 20: Innenprofil
- 22: Außenprofil
- 24: Hohlrad
- 26: Hohlrad
- 28: Zahnrad
- 30: Zahnrad

## Patentansprüche

1. Lageranordnung (1) zum drehbaren Lagern eines ersten Trägerelements (2) an einem zweiten Trägerelement (4), wobei die Lageranordnung (1) ein erstes Teil (6) und ein zweites Teil (8) aufweist, die um eine gemeinsame Drehachse (10) rotierbar sind, wobei das erste Teil (6) mit zumindest einem ersten Befestigungsmittel (16) an dem ersten Trägerelement (2) befestigbar ist, und wobei das zweite Teil (8) mit zumindest einem zweiten Befestigungsmittel (18) an dem zweiten Trägerelement (4) befestigbar ist,
**dadurch gekennzeichnet, dass**
das erste Teil (6) zumindest eine erste Durchgangsbohrung aufweist und das zweite Teil (8) zumindest eine zweite Durchgangsbohrung aufweist, wobei die erste und die zweite Durchgangsbohrung derart aufeinander ausrichtbar sind, dass die erste und die zweite Durchgangsbohrung miteinander fluchten und das zweite Befestigungsmittel (18) durch die erste Durchgangsbohrung in die zweite Durchgangsbohrung schiebbar ist und das zweite Teil (8) an dem zweiten Trägerelement (4) befestigt, und wobei das erste Befestigungsmittel (16) in die erste Durchgangsbohrung schiebbar ist und das erste Teil (6) an dem ersten Trägerelement (2) befestigt.

2. Lageranordnung (1) nach Anspruch 1, wobei sich die erste Durchgangsbohrung und die zweite Durchgangsbohrung koaxial zu der gemeinsamen Drehachse (10) erstrecken oder wobei sich die erste Durchgangsbohrung und die zweite Durchgangsbohrung radial zu der gemeinsamen Drehachse (10) erstrecken.

3. Lageranordnung (1) nach einem der vorhergehenden Ansprüche, wobei das zweite Befestigungsmittel (18) ein Innenprofil (20) zur Aufnahme eines Werkzeugs zum Befestigen des zweiten Befestigungsmittels (18) an dem zweiten Trägerelement (4) aufweist.

4. Lageranordnung (1) nach einem der vorhergehenden Ansprüche, wobei das erste Befestigungsmittel (16) ein Außenprofil (22) zur Aufnahme eines Werkzeugs zum Befestigen des ersten Befestigungsmittels (16) an dem ersten Teil (6) aufweist.

5. Lageranordnung (1) nach einem der vorhergehenden Ansprüche, wobei die erste Durchgangsbohrung ein Gewinde aufweist, wobei das erste Trägerelement (2) einen Abstützabschnitt aufweist, und wobei das erste Befestigungsmittel (16) dazu eingerichtet ist, in das Gewinde der ersten Durchgangsbohrung einzugreifen und sich an dem Abstützabschnitt des ersten Trägerelements (2) abzustützen.

6. Lageranordnung (1) nach einem der vorhergehenden Ansprüche, wobei das zweite Trägerelement (4) ein Gewinde aufweist, wobei das zweite Teil (8) ein Abstützabschnitt aufweist, und wobei das zweite Befestigungsmittel (18) dazu eingerichtet ist, in das Gewinde des zweiten Trägerelements (4) einzugreifen und sich an dem Abstützabschnitt des zweiten Teils (8) abzustützen.

7. Lageranordnung (1) nach einem der vorhergehenden Ansprüche, wobei die Lageranordnung (1) zumindest ein drittes Teil aufweist, das zwischen dem ersten Teil (6) und dem ersten Trägerelement (2) und/oder dem zweiten Teil (8) und dem zweiten Trägerelement (4) angeordnet ist, wobei das dritte Teil zumindest eine Aussparung aufweist, die mit der ersten und der zweiten Durchgangsbohrung ausrichtbar ist.

8. Lageranordnung (1) nach einem der vorhergehenden Ansprüche, wobei die Lageranordnung (1) ein Getriebegehäuse ist.

9. Lageranordnung (1) nach einem der vorhergehenden Ansprüche, wobei das erste Teil (6) und das zweite Teil (8) ein Radiallager oder ein Axiallager sind.

10. Roboter mit einem ersten Trägerelement (2), einem zweiten Trägerelement (4) und einer Lageranordnung (1) nach einem der vorhergehenden Ansprüche, um das erste Trägerelement (2) drehbar an dem zweiten Trägerelement (4) zu lagern.

## Claims

1. Bearing arrangement (1) for rotatably mounting a first carrier element (2) on a second carrier element (4), the bearing arrangement (1) having a first part (6) and a second part (8) which can be rotated about a common rotational axis (10), it being possible for the first part (6) to be fastened to the first carrier element (2) by way of at least one first fastening means (16), and it being possible for the second part (8) to be fastened to the second carrier element (4) by way of at least one second fastening means (18), **characterized in that** the first part (6) has at least one first through bore and the second part (8) has at least one second through bore, it being possible for the first and the second through bore to be aligned with one another in such a way that the first and the second through bore are flush with one another and the second fastening means (18) can be pushed through the first through bore into the second through bore and fastens the second part (8) to the second carrier element (4), and it being possible for the first fastening means (16) to be pushed into the first through bore, and the said first fastening means (16) fastening the first part (6) to the first carrier element (2).

2. Bearing arrangement (1) according to Claim 1, the first through bore and the second through bore extending coaxially with respect to the common rotational axis (10), or the first through bore and the second through bore extending radially with respect to the common rotational axis (10).

3. Bearing arrangement (1) according to one of the preceding claims, the second fastening means (18) having an inner profile (20) for receiving a tool for fastening the second fastening means (18) to the second carrier element (4).

4. Bearing arrangement (1) according to one of the preceding claims, the first fastening means (16) having an outer profile (22) for receiving a tool for fastening the first fastening means (16) to the first part (6).

5. Bearing arrangement (1) according to one of the preceding claims, the first through bore having a thread, the first carrier element (2) having a supporting section, and the first fastening means (16) being set up to engage into the thread of the first through bore and to be supported on the supporting section of the first carrier element (2).

6. Bearing arrangement (1) according to one of the preceding claims, the second carrier element (4) having a thread, the second part (8) having a supporting section, and the second fastening means (18) being set up to engage into the thread of the second carrier element (4) and to be supported on the supporting section of the second part (8) .

7. Bearing arrangement (1) according to one of the preceding claims, the bearing arrangement (1) having at least one third part which is arranged between the first part (6) and the first carrier element (2) and/or between the second part (8) and the second carrier element (4), the third part having at least one cut-out which can be aligned with the first and the second through bore.

8. Bearing arrangement (1) according to one of the preceding claims, the bearing arrangement (1) being a transmission housing.

9. Bearing arrangement (1) according to one of the preceding claims, the first part (6) and the second part (8) being a radial bearing or an axial bearing.

10. Robot with a first carrier element (2), a second carrier element (4) and a bearing arrangement (1) according to one of the preceding claims for mounting the carrier element (2) rotatably on the second carrier element (4).

## Revendications

1. Ensemble de paliers (1) pour supporter en rotation un premier élément porteur (2) sur un deuxième élément porteur (4), l'ensemble de paliers (1) présentant une première partie (6) et une deuxième partie (8) qui peuvent tourner autour d'un axe de rotation (10) commun, dans lequel la première partie (6) peut être fixée au premier élément porteur (2) par au moins un premier moyen de fixation (16), et dans lequel la deuxième partie (8) peut être fixée au deuxième élément porteur (4) par au moins un deuxième moyen de fixation (18),
**caractérisé en ce que** la première partie (6) présente au moins un premier perçage traversant et la deuxième partie (8) présente au moins un deuxième perçage traversant, le premier et le deuxième perçage traversant pouvant être orientés l'un par rapport à l'autre de telle sorte que le premier et le deuxième perçage traversant sont alignés l'un par rapport à l'autre et que le deuxième moyen de fixation (18) peut être poussé à travers le premier perçage traversant dans le deuxième perçage traversant et fixe la deuxième partie (8) au deuxième élément porteur (4), et le premier moyen de fixation (16) pouvant être poussé dans le premier perçage traversant et fixant la première partie (6) au premier élément porteur (2).

2. Ensemble de paliers (1) selon la revendication 1, dans lequel le premier perçage traversant et le deuxième perçage traversant s'étendent coaxialement à l'axe de rotation (10) commun, ou dans lequel le premier perçage traversant et le deuxième perçage traversant s'étendent radialement à l'axe de rotation (10) commun.

3. Ensemble de paliers (1) selon l'une quelconque des revendications précédentes, dans lequel le deuxième moyen de fixation (18) présente un profil intérieur (20) pour recevoir un outil destiné à fixer le deuxième moyen de fixation (18) au deuxième élément porteur (4).

4. Ensemble de paliers (1) selon l'une quelconque des revendications précédentes, dans lequel le premier moyen de fixation (16) présente un profil extérieur (22) pour recevoir un outil destiné à fixer le premier moyen de fixation (16) à la première partie (6).

5. Ensemble de paliers (1) selon l'une quelconque des revendications précédentes, le premier perçage traversant présentant un filet, le premier élément porteur (2) présentant une partie d'appui, et le premier moyen de fixation (16) étant aménagé pour venir en prise avec le filet du premier perçage traversant et pour s'appuyer sur la partie d'appui du premier élément porteur (2).

6. Ensemble de paliers (1) selon l'une quelconque des revendications précédentes, le deuxième élément porteur (4) présentant un filet, la deuxième partie (8) présentant une partie d'appui, et le deuxième moyen de fixation (18) étant aménagé pour venir en prise avec le filet du deuxième élément porteur (4) et pour s'appuyer sur la partie d'appui de la deuxième partie (8).

7. Ensemble de paliers (1) selon l'une quelconque des revendications précédentes, l'ensemble de paliers (1) présentant au moins une troisième partie qui est disposée entre la première partie (6) et le premier élément porteur (2) et/ou entre la deuxième partie (8) et le deuxième élément porteur (4), la troisième partie présentant au moins un évidement qui peut être orienté sur le premier et le deuxième perçage traversant.

8. Ensemble de paliers (1) selon l'une quelconque des revendications précédentes, dans lequel l'ensemble de paliers (1) est un carter de transmission.

9. Ensemble de paliers (1) selon l'une quelconque des revendications précédentes, dans lequel la première partie (6) et la deuxième partie (8) sont un palier radial ou un palier axial.

10. Robot comprenant un premier élément porteur (2), un deuxième élément porteur (4) et un ensemble de paliers (1) selon l'une quelconque des revendications précédentes pour supporter en rotation le premier élément porteur (2) sur le deuxième élément porteur (4) .
